# EUROPEAN PATENT SPECIFICATION

(11) **EP 2 558 185 B1**
(45) Date of publication and mention of the grant of the patent: **06.05.2015**
(21) Application number: 11718523.1
(22) Date of filing: 15.04.2011
(51) Int. Cl.: B01D 53/62, B01D 53/80

(54) **CO2 SCRUBBER/SEPARATOR USING A CYCLIC CARBONATOR FOR CONTROLLED CARBONATE/BICARBONATE PRODUCTION**
CO2-ABSORBER/ABSCHEIDER MIT EINEM ZYKLISCHEN KARBONATOR FÜR DIE GESTEUERTE HERSTELLUNG VON KARBONAT/BIKARBONAT
ÉPURATEUR/SÉPARATEUR DE CO2 UTILISANT UN CARBONATEUR CYCLIQUE POUR LA PRODUCTION CONTRÔLÉE DE CARBONATE/BICARBONATE

(30) Priority: 15.04.2010 NO 20100540
(43) Date of publication of application: 20.02.2013
(73) Proprietor: Enpro AS, 0167 Oslo (NO); Engineering Solutions Ltd, Abu Dhabi (AE)
(72) Inventor: MOHAMED, Olfi, Abu Dhabi (AE); FARHAT, Tarek R., Memphis, Tennessee TN 38152 (US)
(74) Representative: Oslo Patentkontor AS
(86) International application number: PCT/NO2011/000126
(87) International publication number: WO 2011/129707

(56) References cited:
- WO-A1-2010/021616
- WO-A2-2009/155539
- ES-A1- 2 315 187
- US-A1- 2007 217 981
- J.B. JOSHI ET AL: "Mechanically agitated gas-liquid reactors", CHEMICAL ENGINEERING SCIENCE, vol. 37, no. 6, 1 January 1982 (1982-01-01), pages 813-844, XP55002096, ISSN: 0009-2509, DOI: 10.1016/0009-2509(82)80171-1

## Description

The present invention comprises a pressurized carbonator reactor that circulates the mother carbonate/bicarbonate liquor to maximize the yield of the separated solids and reduce reaction time. In the cyclic process CO₂ gas combines with soluble hydroxides to produce high purity carbonate/bicarbonate slurry under controlled pH conditions. The invention also comprises a process for controlled carbonate/bicarbonate production through the use of the indicated scrubber/reactor.

### TECHNICAL FIELD OF THE INVENTION

The present invention relates to a method and a plant design for reacting soluble hydroxides (e.g. NaOH, KOH, NH₄OH, ...) with CO₂ from a pure source, air/CO₂ source, exhaust gas/CO₂ source or natural gas/CO₂ source. The product of the invention is CO₂ scrubbed gas stream, and a solid bicarbonate (e.g. NaHCO₃) and/or carbonate (e.g. Na₂CO₃) product. The products bicarbonate/carbonate are high purity thus are readily marketable to specialty industry or decomposed under a circulation stream to produce high purity CO₂ gas stream ready for industrial usage or storage.

### BACKGROUND OF THE INVENTION

Energy usage for regenerating the CO₂ adsorbent is critical to all present CO₂ sequestration processes. Lowering the energy use for sequestering CO₂ is needed for achieving goals of reduction of CO₂ emissions. Process economics is also a vital part of the solution. Conventional amine processes are claimed to use about 4 MJ/kg CO₂ sequestered and some other processes claim a use down to 3.2 MJ/kg CO₂ sequestered. The process according to the present invention achieves results that are better than this by using less energy and at the same time produce a saleable product.

Currently CO₂ is removed from power plant flue gas by few different methods mainly absorbing it in some form of amine solution and producing pure compressed CO₂ to be deposited. Energy use is estimated at between everything between 10 to 18% of power plant production. Another goal for present developments is less than about 5% by using low temperature decomposable bicarbonates to produce high purity streams of CO₂. Some processes in early stages also target the relatively rare pressurized energy conversion technologies. This needs retrofits to be carried out on boilers.

Common to most of these known technologies is that CO₂ must be deposited, typically to old oil and gas fields. This limits the applicability of these technologies as an optimal solution in many areas. WO 2010/021 616 A discloses a process for scrubbing CO₂ in a tank with a stirrer but without a hollow shaft.

Thus, there is clearly a need for better solutions, and the present invention aims at filling this need.

### GENERAL DISCLOSURE OF THE INVENTION

More precisely the main objective of the present invention is to achieve a method and a novel plant design for using soluble basic solutions such as NaOH, KOH, NH₄OH, etc. to absorb CO₂ from any industrial CO₂ emission sources and consequently produce the corresponding high purity bicarbonates and/or carbonates. The low temperature bicarbonates can be circulated to produce high purity CO₂ gas. For example, the bicarbonates of potassium or ammonium can be decomposed at chimney temperatures between 60 to 120 °C to produce the pure CO₂ streams while the other products are circulated back to the cyclic carbonator reactor.

Particularly, the present invention includes a new and optimised Carbonation reactor. This Carbonation reactor has been designed to ensure for optimised chemical reaction between the CO₂ in the exhaust gas and the saturated basic solution (i.e. M₂CO₃/MHCO₃, M is alkali or ammonium). The Carbonation reactor's agitator is specially designed to optimise the contact area between the CO₂ and the reacting solution components, thus providing an improved carbonation reactor. This is provided for based on kinetics and optimised bubble size and bubble spread distribution. The said method after it enters the cyclic mode can reduce reaction time from an average of six hours to an average of 30 to 40 minutes.

As a result, the present invention uses substantially less than 18% of the energy from the power plant and produces useful and marketable products: alkali and ammonium bicarbonates/carbonates and for separation process pure CO₂ streams. In the first case there is no CO₂ to be deposited, as this is mainly incorporated in the products.

Thus, the carbonator comprises a steel tank with stirrer and cooled double walls, a heat exchanger that cools the carbonator, a coolant volume, a cooled surface area, an impeller that disperses the gas, where said impeller is mounted on a hollow shaft drawing gas from the gas volume at the top of the reactor, three baffles that extend through almost all of the working volume of said tank, motors with variable speed drives, and the shaft seal is double mechanical type with cooling.

Preferably, the carbonator is a 316 stainless steel tank reactor with stirrer and about 70% cooled double walls, with a heat exchanger volume of 1 m³ - 0.275m³, a coolant volume of 56 litres, a cooled surface area of approximately 4m², a maximum height of 1835 mm and a diameter of 1000 mm, where the heat that can be removed is about 5kW/°C, and the heat exchanger cools the full carbonator reactor at 4°C/h, while the gas is dispersed from an impeller mounted on a hollow shaft drawing gas from the gas volume at the top of the reactor, while three baffles of 100 mm width extend through almost all of the working volume, and said carbonator reactors have a max filling of 1200 mm recorded height, motors are nominally 3,7 (5 hp) with variable speed drives and a usual operating rpm of about 282, and the carbonator reactor volume to cooled surface area is about 0.23m³/m², while the shaft seal is double mechanical type with cooling.

In the industrial plant assembly the alkali or ammonium solution is preferably reacted with the CO₂ containing flue gas to produce the corresponding bicarbonates/carbonates for further processing based on a pH control of the basic liquor. The CO₂ is preferably fed into the carbonator reactor and bubbled to react with the basic solution producing precipitates of bicarbonates/carbonates in the slurry, and the slurry is preferably separated into precipitate of bicarbonates/carbonates in a filter cake and filtrated in a slurry filter, where the cake is dried. The bicarbonate product is either sold or further processed to carbonate product and pure CO₂ stream while the carbonate is marketable. The filter is recycled back to the mother liquor in the carbonator reactors, which has a positive impact on the seeding of crystals in the carbonator reactor reactions. The cyclic mechanism is a novel mechanism that enhances the efficiency and performance of the carbonation process.

### DETAILED DESCRIPTION OF THE INVENTION

The present invention will now be described in detail with reference to the following figures:
Fig. 1 a-e shows a process plant overview according to the present invention together with a process and instrumentation diagram of the CO₂ scrubbing plant according to the present invention.
Fig. 2 shows a diagram of the carbonator reactor according to the present invention.

The novel plant design uses a new, revised and optimised version of traditional production processes of sodium bicarbonate and/or sodium carbonate using CO₂ by using competitively produced basic solutions based on a cyclic usage of the primitive mother liquor.

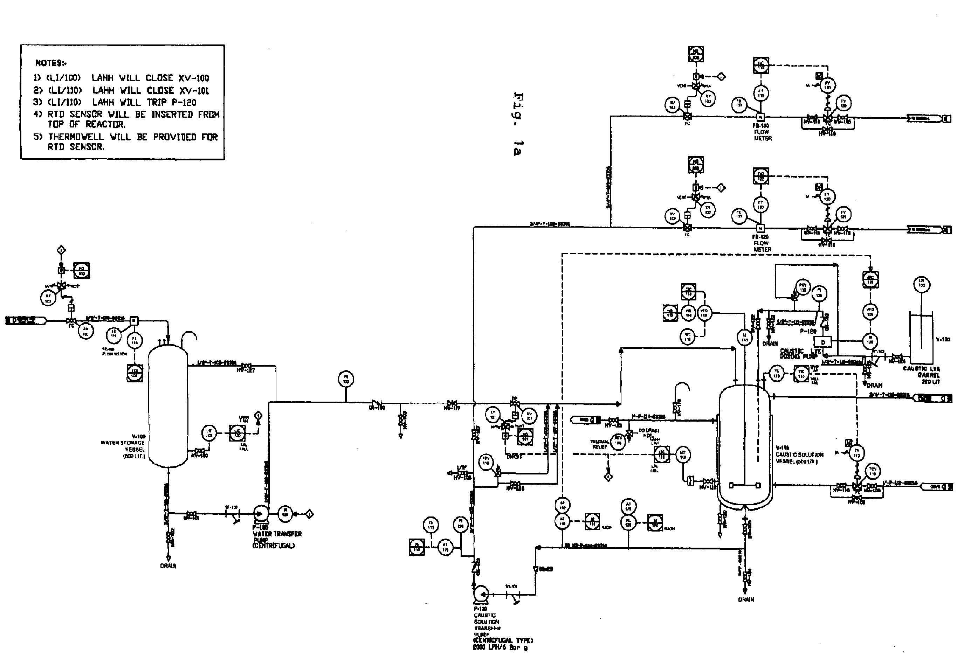

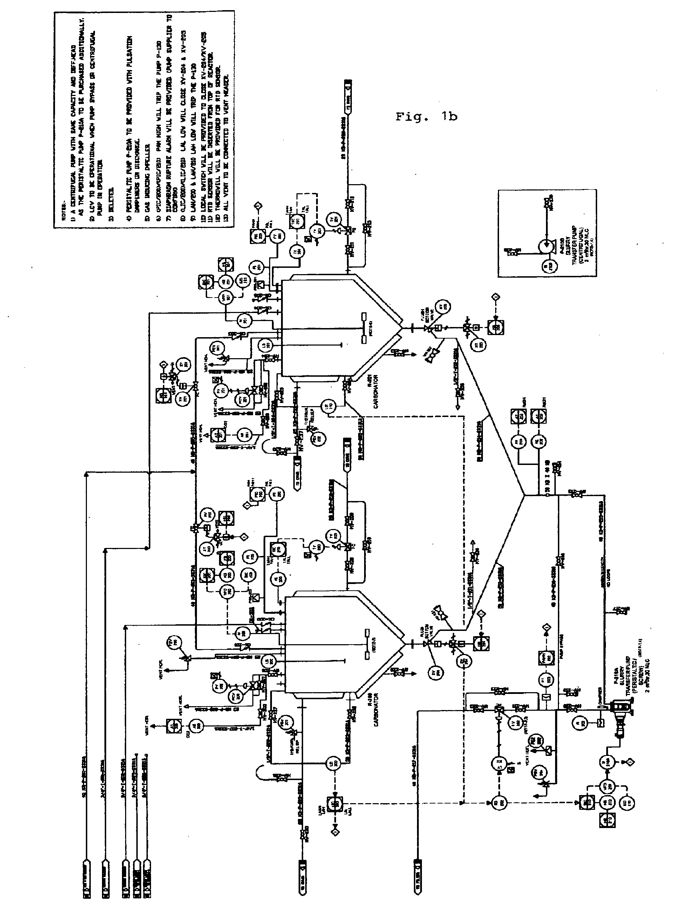

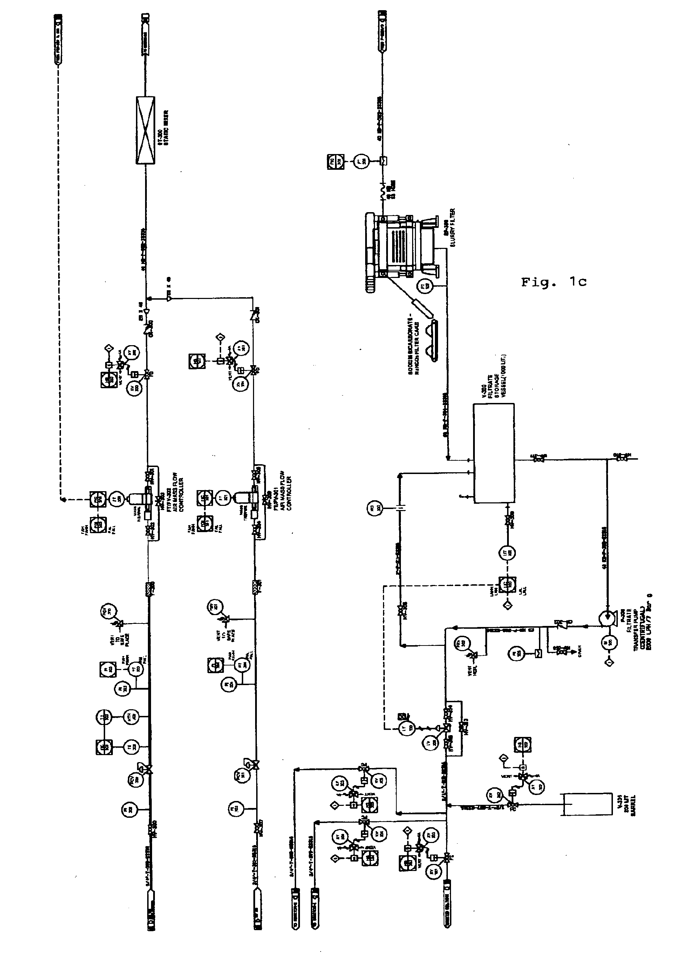

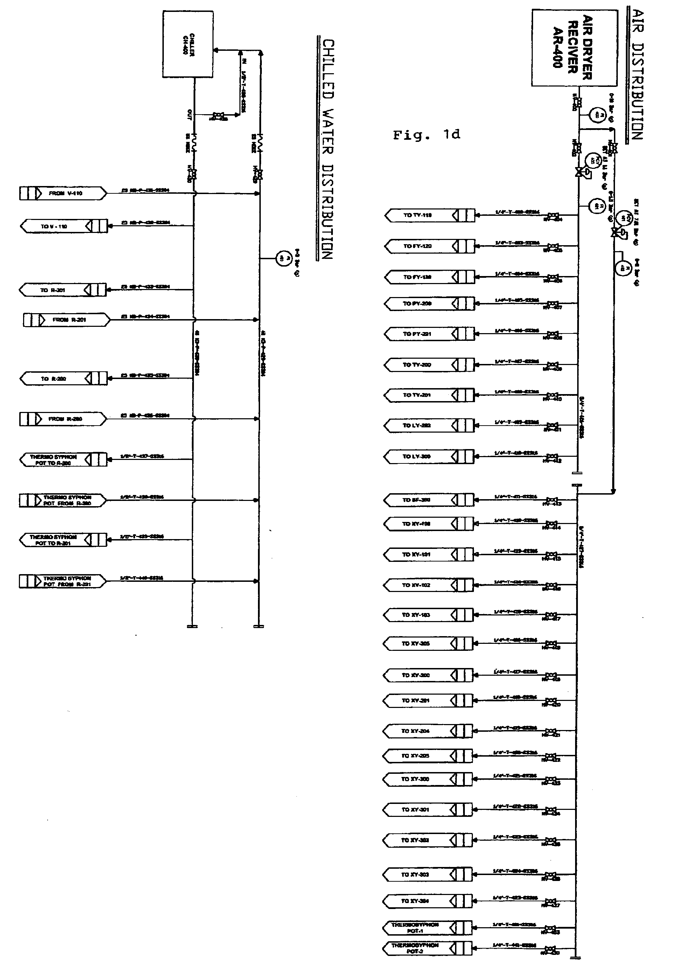

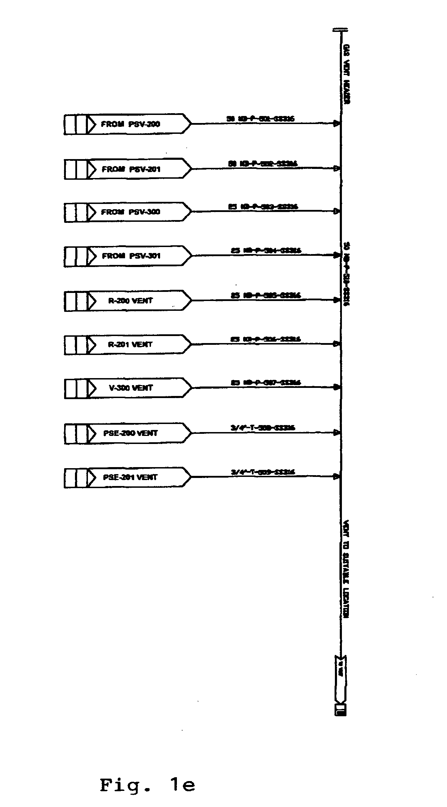

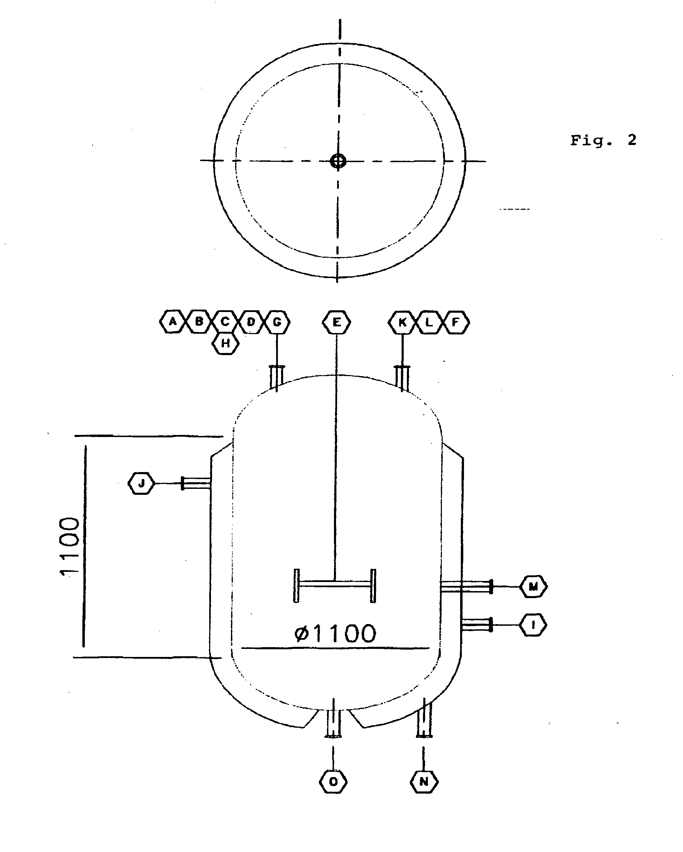

The process according to the present invention starts with soluble hydroxide and saturated basic solution feeds, which predominantly consists of any alkali or ammonium hydroxide and their corresponding carbonates/bicarbonates. With reference to figures 1 and 2, the carbonates/bicarbonates is stored in a Water Storage Tank (1, V-100) while the Caustic Solution Vessel (2, V-110) is supplied with a Transfer Pump (Centrifugal) (P-100). Caustic Lye from the Caustic Lye Barrel (3, V-120) is dosed into the Caustic Solution Vessel (2, V-110) via the Caustic Lye Dosing Pump (Diaphragm type) (P-120). The caustic lye, made from either concentrated (up to 47wt%) or flakes of NaOH, or any other base chemical is stirred well with water to create caustic solution in the Caustic Solution Vessel (2, V-110) and the temperature is controlled by using chilled water from the Chiller (CH-400). The caustic solution is transferred to the Carbonator (4, R-200) via the Caustic Solution Transfer Pump (Centrifugal type) (P-130).

There are two Carbonator reactors (R-200 and R-201 in figure 2), both 1m³ CSTR's with gas inducing sparger.

The Carbonator reactors, as shown in figure 2, are 316 stainless steel tank reactor with stirrer and about 70% cooled double walls. Specification is max 10 bars at 200°C. Water from heat exchanger is used. Useful volumes are 1 m³ each and minimum 0.275m³. The coolant volume is 56 litres. Cooled surface area is approximately 4.2m2. Maximum height is 1835 mm and diameter is 1000 mm. Steel thickness is 10 mm. The heat that can be removed is about 5kW/°C. The heat exchanger cools the full carbonator reactor at 4°C/h. The gas is dispersed from an impeller mounted on a hollow shaft drawing gas from the gas volume at the top of the reactor. Impeller diameter is about 400 mm. There are three baffles of 100 mm width and extending through almost all of the working volume. This type of impeller is said to draw gas to a dept of approximately 3.5 m. They are mounted 150 mm from Carbonator reactor bottom. Normal max filling of the carbonator reactors (R-200 and R-201) will be 1200 mm recorded height. Motors are nominally 5 hp with variable speed drives. Usual operating rpm is about 282. Carbonator reactor volume to cooled surface area is about 0.23m³/m². Shaft seal is double mechanical type with cooling.

Illustrative process to make NaHCO3: As can be seen in figure 1a-e, the caustic solution inlet is at top of the carbonator reactors (R-200 and R-201). Gas, for example CO₂ from CO₂ cylinder (WT-300) mixed with air (controlled by Air Mass Flow Controller (FT/FV-301) through Static Mixer (ST-300) is introduced to the top of the Carbonators. Gas is drawn from headspace in through hollow impeller shaft and well dispersed in the liquid mix (caustic solution) with a gas inducing impeller. The CO₂ in the gas reacts with the saturated caustic solution, to create NaHCO₃ Metering is through thermal gas flow meters and mixed with static mixer. Discharge, mainly water and NaHCO₃ as slurry, from each Carbonator reactor (R-200 and R-201) is run through Reducer and forwarded to common header for both reactors. Upstream from Reducer there are sampling arrangements. The pH and conductivity meters of discharged liquid/slurry from Carbonators (R-200 and R-201) are set to measure the extent of the reaction and the type of products formed. Both Carbonators (R-200 and R-201) have CO₂ measurements on headspace gas. Heat balance over the Carbonator reactors (R-200 and R-201) is also used to follow the reaction.

The slurry discharge from the two Carbonator reactors (R-200 and R-201) goes through a Slurry Transfer Pump (Peristaltic or centrifugal) (P-210A) and the slurry is further taken to a Slurry Filter (SF-300). This Filtration is batch wise in a pressure filter, from which NaHCO₃ filter cake is an output. Continuous operation of the whole unit implies a new/extra filter unit. The filtrate output from the Slurry Filter (SF-300) goes to the Filtrate Storage Vessel (V-300). From the Filtrate Storage Tank (V-300) the filtrate is taken back to the Caustic Solution Vessel (V-110) or directly to the Carbonator reactors (R-200 and R-201). The demo unit provides for good flexibility in recirculation of the filtrate.

The adsorption and precipitation process can be operated continuously through cyclic operation of the two Carbonators (R-200 and R-201) or in series. Seeding of crystals is done by recirculation of filtrate or through only partial emptying of the Carbonator reactors (R-200 and R-201) or a combination of these.

The process is carried through at ambient total pressure and preferably at the highest available CO₂ partial pressure. The process is run at near to ambient temperature, starting at about 25°C to 33°C and at the end of the cycle down to 15°C.

Process control may be achieved with a PC-based SCADA system from GE/Fanuk.

The demo-unit shown in detail herein is constructed to produce maximum of design data for the next scale up, not to serve a CO₂ emission source optimally.

Shortly summarized the present invention may be presented through the following points.

Also the invention comprises:
viii) a process for scrubbing CO₂ from industrial gas streams through a cyclic pressurized carbonator reactor to produce high purity carbonates/bicarbonates, and pure CO₂ streams, wherein the said carbonator reactor comprises a steel tank with stirrer and cooled double walls, a heat exchanger that cools the carbonator, a coolant volume, a cooled surface area, an impeller that disperses the gas, where said impeller is mounted on a hollow shaft drawing gas from the gas volume at the top of the reactor, preferably three baffles that extend through almost all of the working volume of the said tank, motors with variable speed drives, and the shaft seal is preferably of a double mechanical type with cooling.

More specifically the process according to point viii) surpa may be conducted by ix) said carbonator reactor being a 316 stainless steel tank reactor with stirrer and about 70% cooled double walls, with a heat exchanger volume of 1 m³ - 0.275m³ a coolant volume of 56 litres, a cooled surface area of approximately 4m², a maximum height of 1835 mm and a diameter of 1000 mm, where the heat that can be removed is about 5kW/°C, and the chiller cools the full carbonator reactor at 4°C/h, while the gas is dispersed from an impeller mounted on a hollow shaft drawing gas from the gas volume at the top of the reactor, while three baffles of 100 mm width extend through almost all of the working volume, and said carbonator reactors have a max filling of 1200 mm recorded height, motors are nominally 3,7 (5 hp) with variable speed drives and a usual operating rpm of about 282, and the carbonator reactor volume to cooled surface area is about 0.23m³/m², while the shaft seal is double mechanical type with cooling.
x) The process indicated supra in point ix) may be performed in an industrial demo plant assembly for conducting a reaction of removing of CO₂ from combustion gases and including a carbonator reactor according to points i) and ii) surpa.
xi) The process according to the inventikon may be conducted as indicated in point x) supra wherein all soluble hydroxide and saturated carbonates/bi-carbonates mixture is reacted with the CO₂ containing flue gas to produce high purity carbonates/bicarbonates for further processing.
xii) The process according to the present invention may also be conducted in accordance with point x) supra, wherein the CO₂ is fed into the carbonator reactor and bubbled to react with soluble hydroxide and saturated carbonates/bicarbonates mixture, producing precipitates of high purity carbonates/bicarbonates in a slurry.
xiii) The process according to the present invention may also be conducted according to point x) supra, wherein the slurry is separated into precipitate of carbonates/bicarbonates in a filter cake and filtrated in a slurry filter, where the cake is dried or further processed to carbonates or pure CO₂ stream.
xiv) The process according to the present invention may also be conducted according to point xiii) supra, wherein the filtrate is recycled back to the saturated carbonates/bicarbonates tank or recycled directly back to the Carbonator reactors, which has a positive impact on the seeding of crystals in the Carbonator reactor reactions.

## Claims

1. A process for scrubbing CO₂ from industrial gas streams through a cyclic pressurized carbonator reactor to produce high purity carbonates/bicarbonates, and pure CO₂ streams, wherein the said carbonator reactor comprises a steel tank with stirrer and cooled double walls, a heat exchanger that cools the carbonator, a coolant volume, a cooled surface area, an Impeller that disperses the gas, preferably three baffles that extend through almost all of the working volume of the said tank, motors with variable speed drives, and the shaft seal is preferably of a double mechanical type with cooling, and wherein said industrial gas stream including the CO₂ is fed into the carbonator reactor and bubbled to react with soluble hydroxide and saturated carbonates/bicarbonates mixture, producing precipitates of high purity carbonates/bicarbonates in a slurry, **characterised in that** said impeller is mounted on a hollow shaft drawing gas from the gas volume at the top of the reactor.

2. The process according to claim 1, wherein said carbonator reactor being a 316 stainless steel tank reactor with stirrer and about 70% cooled double walls, with a heat exchanger volume of 1 m³ - 0.275m³ a coolant volume of 56 litres, a cooled surface area of 4m², a maximum height of 1835 mm and a diameter of 1000 mm, where the heat that can be removed is about 5kW/°C, and the chiller cools the full carbonator reactor at 4°C/h, while the gas is dispersed from an impeller mounted on a hollow shaft drawing gas from the gas volume at the top of the reactor, while three baffles of 100 mm width extend through almost all of the working volume, and said carbonator reactors have a max filling of 1200 mm recorded height, motors are nominally 3,7 kW (5 hp) with variable speed drives and a operating rpm of about 282, and the carbonator reactor volume to cooled surface area is 0.23m³/m², while the shaft seal is double mechanical type with cooling.

3. The process according to claims 1 or 2, wherein all soluble hydroxide and saturated carbonates/bi-carbonates mixture is reacted with the CO₂ containing flue gas to produce high purity carbonates/bicarbonates for further processing.

4. The process according to claim 1 - 3, wherein the slurry is separated into precipitate of carbonates/bicarbonates in a filter cake and filtrated in a slurry filter, where the cake is dried or further processed to carbonates or pure CO₂ stream.

5. The process according to claim 4, wherein the filtrate is recycled back to the saturated carbonates/bicarbonates tank or recycled directly back to the Carbonator reactors, which has a positive impact on the seeding of crystals in the Carbonator reactor reactions.

## Patentansprüche

1. Verfahren zum Auswaschen von CO₂ aus Industriegasströmen durch einen zyklischen, unter Druck stehenden Karbonatorreaktor, um hochreine Carbonate/Bicarbonate und reine CO₂-Ströme zu erzeugen, wobei der Karbonatorreaktor einen Stahltank mit Rührwerk und gekühlten Doppelwänden, einen Wärmetauscher, der den Karbonator kühlt, ein Kühlmittelvolumen, eine gekühlte Oberfläche, einen Impeller, der das Gas verteilt, bevorzugt drei Stromstörer, die sich über fast das gesamte Arbeitsvolumen des Tanks erstrecken und Motoren mit Regelantrieben umfasst, und wobei der Industriegasstrom umfassend CO₂ in den Karbonatorreaktor überführt und aufgesprudelt wird, um eine Mischung aus gelöstem Hydroxid und gesättigten Carbonaten/Bicarbonaten zu reagieren, so dass hochreine Carbonat/Bicarbonat-Niederschläge in einer Suspension erzeugt werden, **dadurch gekennzeichnet, dass** der Impeller auf einer Hohlwelle befestigt ist, die Gas aus dem Gasvolumen am oberen Ende des Reaktors saugt und die Wellendichtung bevorzugt doppeltwirkend mit Kühlung ist.

2. Verfahren nach Anspruch 1, wobei der Karbonatorreaktor ein Rührkesselreaktor aus rostfreiem 316 Stahl mit Rührwerk und ungefähr zu 70 % gekühlten Doppelwänden ist, mit einem Wärmetauschervolumen von 1 m³ - 0,275 m³, einem Kühlmittelvolumen von 56 Litern, einer gekühlten Oberfläche von 4 m², einer maximalen Höhe von 1835 mm und einem Durchmesser von 1000 mm, wobei die Wärme, die entfernt werden kann, ungefähr 5 kW/°C beträgt, und der Kühler den vollen Karbonatorreaktor bei 4 °C kühlt, während das Gas von einem Impeller verteilt wird, der auf einer Hohlwelle befestigt ist, die Gas aus dem Gasvolumen am oberen Ende des Reaktors saugt, wobei sich drei Stromstörer von 100 mm Breite durch fast das gesamte Arbeitsvolumen erstrecken, und der Karbonatorreaktor eine maximale Füllung von 1200 mm festgestellter Höhe aufweist, Motoren mit Regelantrieben nominal 3,7 kW (5 PS) und Betriebsumdrehungen von ungefähr 282 rpm aufweisen, und das Karbonatorreaktorvolumen zu gekühlter Oberfläche 0,23 m³/m² beträgt, während die Wellendichtung doppeltwirkend mit Kühlung ist.

3. Verfahren nach Anspruch 1 oder 2, wobei das gesamte Mischung aus löslichem Hydroxid und gesättigten Carbonaten/Bicarbonaten mit dem CO₂-enthaltenden Rauchgas umgesetzt wird, um hochreine Carbonate/Bicarbonate zur weiteren Verarbeitung zu erzeugen.

4. Verfahren nach den Ansprüchen 1 bis 3, wobei die Suspension in einen Carbonat/Bicarbonat-Niederschlag in einem Filterkuchen getrennt und in einem Suspensionsfilter filtriert wird, wobei der Kuchen getrocknet und weiter zu Carbonaten oder einem reinen CO₂-Strom verarbeitet wird.

5. Verfahren nach Anspruch 4, wobei das Filtrat in den gesättigten Carbonate/Bicarbonate-Tank zurückgeführt wird oder direkt in die Karbonatorreaktoren zurückgeführt wird, was eine vorteilhafte Auswirkung auf die Keimbildung von Kristallen in den Karbonatorreaktorreaktionen hat.

## Revendications

1. Processus pour épurer le CO₂ provenant de flots de gaz industriel à travers un réacteur carbonisateur pressurisé cyclique pour produire des carbonates / bicarbonates de pureté élevée, et des flots de CO₂ pur, dans lequel ledit réacteur carbonisateur comprend un réservoir d'acier avec un agitateur et des parois doubles refroidies, un échangeur thermique qui refroidit le carbonisateur, un volume de fluide de refroidissement, une superficie refroidie, une turbine qui disperse le gaz, de préférence trois chicanes qui s'étendent à travers presque tout le volume de travail dudit réservoir, des moteurs avec des commandes à vitesse variable, et le joint d'arbre est de préférence d'un type mécanique double avec refroidissement, et dans lequel ledit flot de gaz industriel incluant le CO₂ est amené dans le réacteur carbonisateur et mis à barboter pour réagir avec de l'hydroxyde soluble et un mélange de carbonates / bicarbonates saturés, produisant des précipités de carbonates / bicarbonates de pureté élevée dans une pâte,
**caractérisé en ce que** ladite turbine est montée sur un arbre creux prélevant du gaz provenant du volume du gaz au sommet du réacteur.

2. Processus selon la revendication 1, dans lequel ledit réacteur carbonisateur est un réacteur à réservoir d'acier inoxydable 316 avec agitateur et environ 70 % de parois doubles refroidies, avec un volume d'échangeur thermique de 1 m³ à 0,275 m³, un volume de fluide de refroidissement de 56 litres, une superficie refroidie de 4 m², une hauteur maximale de 1 835 mm et un diamètre de 1 000 mm, où la chaleur qui peut être enlevée est d'environ 5 kW/°C, et le dispositif de réfrigération refroidit le réacteur carbonisateur plein à 4 °C/h, tandis que le gaz est dispersé à partir d'une turbine montée sur un arbre creux prélevant du gaz provenant du volume de gaz au sommet du réacteur, tandis que trois chicanes de 100 mm de largeur s'étendent à travers presque tout le volume de travail, et lesdits réacteurs carbonisateurs ont un remplissage maximal de 1 200 mm de hauteur enregistrée, des moteurs nominalement de 3,7 kW (5 hp) avec des commandes à vitesse variable et une vitesse opérationnelle en tr/min d'environ 282, et le volume de réacteur carbonisateur sur la superficie refroidie est de 0,23m³/m², tandis que le joint d'arbre est du type mécanique double avec refroidissement.

3. Processus selon les revendications 1 ou 2, dans lequel tout l'hydroxyde soluble et un mélange de carbonates / bicarbonates saturés réagissent avec les gaz brûlés contenant du CO₂ pour produire des carbonates / bicarbonates de pureté élevée pour traitement ultérieur.

4. Processus selon la revendication 1 à 3, dans lequel la pâte est séparée en un précipité de carbonates / bicarbonates dans un gâteau de filtration et filtrée dans un filtre à pâte, où le gâteau est séché ou davantage traité en carbonates ou flot de CO₂ pur.

5. Processus selon la revendication 4, dans lequel le filtrat est recyclé en retour vers le réservoir de carbonates / bicarbonates saturés ou recyclé directement en retour vers les réacteurs carbonisateurs, ce qui a un impact positif sur l'ensemencement de cristaux dans les réactions de réacteur carbonisateur.
